# EUROPEAN PATENT SPECIFICATION

(11) **EP 0 765 773 B1**
(45) Date of publication and mention of the grant of the patent: **06.06.2001**
(21) Application number: 96307063.6
(22) Date of filing: 27.09.1996
(51) Int. Cl.: B60K 17/356

(54) **A soil compactor**
Walzenzug zum Erdverdichten
Compacteur de sol

(30) Priority: 29.09.1995 US 537183
(43) Date of publication of application: 02.04.1997
(73) Proprietor: INGERSOLL-RAND COMPANY, Woodcliff Lake, NJ 07675 (US); SAUER-DANFOSS INC., Ames, Iowa 50010 (US)
(72) Inventor: Yates, Steve K., Scotland, Pennsylvania 17254 (US); Magalski, Edward D., York, Pennsylvania 17404 (US)
(74) Representative: Feakins, Graham Allan

(56) References cited:
- EP-A- 0 226 844
- EP-A- 0 505 254
- DE-U- 8 623 590
- FR-A- 2 651 729
- US-A- 4 260 280

## Description

This invention relates generally to mobile soil compactors, and concerns traction control systems in compactors.

Prior art soil compactors have a closed loop, parallel circuit traction system which consists of an axle with tyres and in the rear of the unit and a steel drum that drives in the front. The axle is driven by a high speed hydraulic motor fitted into the axle's differential housing. The axle contains a no-spin differential that restricts one tyre from spinning out and disabling power to the other; both tyres will attempt to drive the compactor. The drum is driven by either a gear box with a high speed low torque hydraulic motor input or a low speed high torque hydraulic motor. In this system, if either the tyres or the drum spin because of loss of sufficient friction to the ground the other driving element basically becomes non-driving because all the hydraulic pump flow is directed to the spinning element, taking the path of least resistance. When this happens the hydraulic pressure in the system is also reduced further limiting the machine's capability.

Presently the system used to counter this problem on high grades is a traction valve or hydraulic flow divider/combiner. This component splits the flow from or returning to the hydraulic pump into front and rear flows where each flow is directed to the particular driving element in order to power it, therefore keeping full pump flow from going to a single spinning element. The problem with this type of system is the heat generated in it due to the valving internal in the component as well as the method of control; that being pressure drop in the system loop between the front and rear element circuits. Also some flow divider systems are only engaged when the operator operates a switch, in these cases the wheels or drum have usually displaced some amount of soil which will in turn increase the effective grade the machine is attempting to climb. Therefore this delay in operation versus functional need is also a disadvantage to this system.

US-A-4 260 280 discloses a road roller that generally discloses the pre-characterising features of claim 1.

According to the present invention, there is provided a soil compactor comprising:
(a) tractor means for supporting a rear portion of said compactor, said tractor means being mounted on a one driving member rotatably connected to a first transverse axle;
(b) means for compacting material mounted on a second transverse axle parallel to said first axle, said compacting means being connected to said tractor means.
(c) a closed loop, parallel hydraulic circuit means for propelling said compactor, said hydraulic circuit means comprising:
   (i) a first hydraulic motor for rotating said one driving member, said first motor including an electronic torque control means for varying hydraulic displacement of said first motor to vary the torque applied by said first motor; and
   (ii) a seconbd hydraulic motor for rotating said compacting means, said second motor including an electronic torque control means (38) for varying
   hydraulic displacement of said second motor to vary the torque applied by said second hydraulic motor; characterised by
(d) traction control means for controlling said hydraulic circuit means to selectively and independently vary the torque applied by the first and second hydraulic motors, whereby the one driving member rotation speed and the connecting means rotation speed are controlled to within a predetermined ratio of each other, said traction control means comprising:
   (i) a first speed sensing means for sensing the rotational speed of said first hydraulic motor and generating a first electrical signal proportional thereto:
   (ii) a second speed sensing means for sensing the rotational speed of said second hydraulic motor and generating a second electrical signal proportional thereto:
   (iii) microcontroller means electrically connected to said first and second speed sensing means and to said electronic torque control means of each of said first and second motors, said microcontroller means being responsive to said first and second electrical signals to drive said electronic torque control means of at least one said first and second motor means so as to vary the torque applied by said one of said first and second motors such that the one driving member rotation speed and the compacting means rotation speed are controlled to within said predetermined ratio; there being:
(e) slope sensing means for sensing when said compactor is positioned on a slope such that said compacting means is relatively above or below said one driving member, said slope sensing means being electrically connected to said microcontroller means, so that the torque applied by said first motor is reduced to a predetermined amount when said driving member is elevated above said compacting means so as to control one driving member rotational speed to permit said one driving member to maintain contact with a sloped surface and the torque applied by said second motor is adjusted to maintain said compacting means speed and one driving member speed within said predetermined ratio.

One embodiment of the invention will now be described by way of example with reference to the accompanying drawings, in which:-
Fig. 1 is a schematic elevational side view, partially in cross-section, of an embodiment of a soil compactor;
Fig. 2 is a schematic plan view, partially in crosssection, of a soil compactor; and

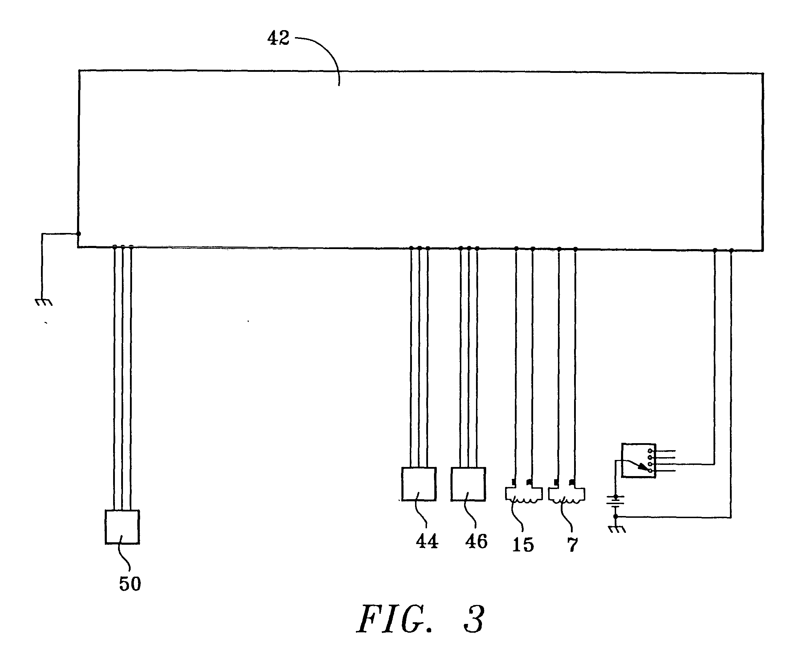

Fig. 3 is a schematic electrical circuit; and
Fig. 4 is a schematic hydraulic circuit of a closed loop parallel circuit traction system.

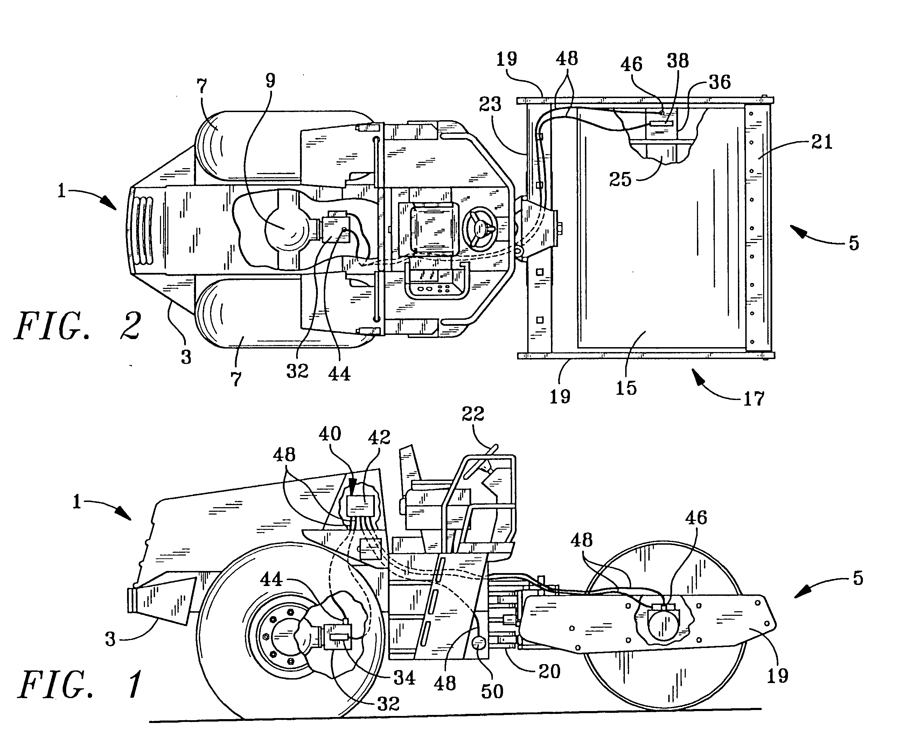

Figs. 1 and 2 show an earth compactor 1 which can be of the vibratory type or of the non-vibratory type. Compactor 1 includes a rear tractor portion 3 and a front drum portion 5. Rear tractor portion 3 is mounted on a pair of rotatable pneumatic tyres 7 that are interconnected to each other by a first transverse axle 9, as is conventional. Drum portion 5 includes a planar, rotatable steel drum 15 for compacting material. Drum 15 is mounted on a drum frame 17 formed by a pair of parallel side frame members 19 connected to a pair of parallel front and rear members 21, 23 respectively. Drum 15 is mounted for rotation on a second transverse axle 25 that is parallel to first axle 9, as is conventional. Drum 17 is connected to tractor portion 3, in this case by a conventional articulated joint 20. Articulated joint 20 is used to steer compactor 1 in response to operator manipulated steering wheel 22, as is well known. Articulated joint 20 is optional, as this invention will work with a compactor in which drum portion 5 and tractor portion 3 are rigidly connected.

Carried on compactor 1 is a closed loop, parallel hydraulic circuit means, described hereinafter, for propelling compactor 1. The hydraulic circuit means includes first hydraulic motor 32 for rotating tyres 7. First motor 32 includes a conventional electronic torque control means 34 (Fig. 1) for varying the torque applied by motor 32. Motor 32 can control torque by varying the hydraulic displacement of motor 32 by manipulating a "swash plate" within motor 32. Alternatively, a motor can be used that controls torque by manipulating hydraulic pressure within the motor. Varying the torque applied by motor 32 varies the rotational speed of tyres 7, as is well known.

Hydraulic circuit means further includes second hydraulic motor 36 for rotating drum 15. Second motor 36 includes a conventional electronic torque control means 38 for varying the torque applied by motor 36. Motor 36 can control torque by varying the hydraulic displacement of motor 36 by manipulating a "swash plate" within motor 36. Alternatively, a motor can be used that controls torque by manipulating hydraulic pressure within the motor. Varying the torque applied by motor 36 varies the rotational speed of drum 15, as is well known.

The hydraulic circuit means further includes a traction control means 40 (Fig. 1) that controls hydraulic circuit means to selectively and independently vary the speed of motors 32, 36, whereby the tyre rotational speed and drum rotational speed are maintained within a predetermined ratio of each other. We prefer that ratio to be 1.0, plus or minus 5 percent. However, this ratio can vary somewhat, depending upon the machine, the type of material being compacted and the specifications of motors 32, 36. Traction control means 40 permits this ratio to be input into a microcontroller 42, described hereinafter, to customize the performance of compactor 1.

Traction control means 40 makes use of a first speed sensing means 44 of motor 32, that is conventionally provided with motor 32. Traction control means 40 also makes use of a second speed sensing means 46 of motor 36, that is conventionally provided with motor 36.

The speed sensing means 44 or motor 32 senses the rotational speed of motor 32 and generates a first electrical signal proportional thereto. The speed sensing means 46 of motor 36 senses the rotational speed of motor 36 and generates a second electrical signal proportional thereto.

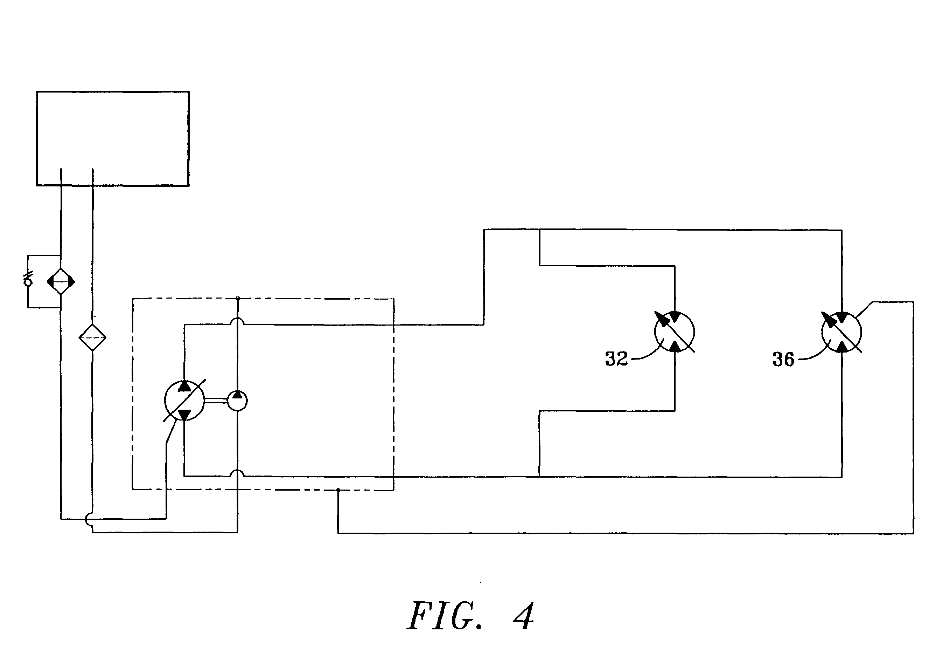

Microcontroller 42 is electronically connected (schematically shown as 48 in Fig. 1 and Fig. 4) to the speed sensing means of motors 32, 36 and is responsive to first and second electrical signals therefrom. Microcontroller 42 receives first and second electrical signals indicative of the speed of motors 32, 36 and compares the two. When both the tyres and the drum are experiencing traction, the speed of motors 32, 36 is at the preselected ratio, and microcontroller does not cause any action to take place on motors 32, 36.

As is well known for a parallel, closed loop hydraulic circuit for compactors, when either the tyres or the drum are slipping, the speed of the slipping member increases. The microcontroller 42 detects that the ratio is out of the preselected range, and immediately lowers the torque applied by the motor 32, 36 to the slipping member until the ratio comes back into range.

A ground slope sensing means 50 (Fig. 1), described hereinafter, is included to counteract a condition known as "tyre hop". Tyre hop occurs when compactor 1 is positioned on a slope wherein the tyres 7 are elevated above drum 15. When compactor 1 moves up slope in this orientation, tyres 7 experience bouncing and intermittent slippage, owing to the light weight on tyres 7. Tyre hop does not occur when compactor 1 is going down slope, or when drum 15 is elevated with respect to tyres 7.

Slope sensing means 50 generates a third electrical signal to indicate when tyres 7 are elevated above drum 15. Microcontroller 42, being electronically connected to slope sensing means 50, is responsive to the third electrical signal. Microcontroller 42 sends a signal to motor 32 to immediately lower the torque applied to tyres 7 by motor 32, thereby lowering the speed of tyres 7, which causes the preselected ratio of speeds between tyres 7 and drum 15 to go out of range. Immediately, microcontroller 42 sends a signal to motor 36 to immediately lower the torque applied to drum 15 by motor 36, thereby lowering the speed of drum 15, which causes the preselected ratio of speeds between tyres 7 and drum 15 to come back into range.

In operation, this invention uses a traction drive control system 40 that will maximize the traction capabilities of the machine regardless of ground conditions by monitoring and adjusting the tractive effort of each driving element to match ground conditions. This is done by monitoring the front and rear driving elements 7, 15, respectively, and when slipping is detected the control system 40 would reduce the torque being generated at that element while enabling the other element to continue driving with the first element driving at whatever tractive effort can be transmitted to the ground without spinout.

The speed sensing system 44, 46 would monitor the relative speed of the front and rear driving elements 7 and 15, respectively, and would sense when one of those elements first begins to slip. At this point the control system 40 would reduce the motor displacement or hydraulic pressure, thereby reducing the driving torque at that element to the point just prior to slipping, thus maximizing the tractive effort of this element. The reaction time that this occurs is important so the element doesn't spinout and dig a hole which would be more difficult to climb than the grade prior to spinning.

This invention will work if tyres 7 are replaced by a second drum 15.

For a microcontroller 42, we prefer a microcontroller supplied by Sauer Sundstrand Company, under the designation "DC2 Microcontroller" described in booklet BLN 95-9041-3, March 1993.

For motors 32, 36 we prefer motors supplied by Sauer Sundstrand Company under the designation "Series 51 Motors With Electric Displacement Controls and a Hall Effect Speed Pick-Up". For motor 32 the Sauer Sundstrand further designation is: 51-V-060-A-S1-N-EP-A5-J-Y-A6-NNS-015-AA-20-20-00. For motor 36 the Sauer Sundstrand further designation is: 51-V-060-R-D1-C-EP-A5-J-Y-A6-NNS-015-AA-20-20-00.

For slope sensing means 50, we prefer a device supplied by Sauer Sundstrand Company with the Model No. MCX106A.

## Claims

1. A soil compactor comprising:
(a) tractor means for supporting a rear portion (3) of said compactor, said tractor means being mounted on a one driving member rotatably connected to a first transverse axle (9);
(b) means (17) for compacting material mounted on a second transverse axle (25) parallel to said first axle (9), said compacting means (17) being connected to said tractor means.
(c) a closed loop, parallel hydraulic circuit means for propelling said compactor, said hydraulic circuit means comprising:
(i) a first hydraulic motor (32) for rotating said one driving member, said first motor including an electronic torque control means (34) for varying hydraulic displacement of said first motor (32) to vary the torque applied by said first motor; and
(ii) a second hydraulic motor (36) for rotating said compacting means (17), said second motor including an electronic torque control means (38) for varying
hydraulic displacement of said second motor to vary the torque applied by said second hydraulic motor; characterised by
(d) traction control means (40) for controlling said hydraulic circuit means to selectively and independently vary the torque applied by the first and second hydraulic motors, whereby the one driving member rotation speed and the connecting means rotation speed are controlled to within a predetermined ratio of each other, said traction control means comprising:
(i) a first speed sensing means (44) for sensing the rotational speed of said first hydraulic motor (32) and generating a first electrical signal proportional thereto:
(ii) a second speed sensing means (46) for sensing the rotational speed of said second hydraulic motor (36) and generating a second electrical signal proportional thereto:
(iii) microcontroller means (42) electrically connected to said first and second speed sensing means and to said electronic torque control means of each of said first and second motors, said microcontroller means being responsive to said first and second electrical signals to drive said electronic torque control means of at least one said first and second motor means so as to vary the torque applied by said one of said first and second motors such that the one driving member (15) rotation speed and the compacting means (17) rotation speed are controlled to within said predetermined ratio; there being:
(e) slope sensing means (50) for sensing when said compactor is positioned on a slope such that said compacting means (17) is relatively above or below said one driving member (15), said slope sensing means being electrically connected to said microcontroller means (42), so that the torque applied by said first motor (32) is reduced to a predetermined amount when said driving member (15) is elevated above said compacting means (17) so as to control one driving member rotational speed to permit said one driving member to maintain contact with a sloped surface and the torque applied by said second motor (36) is adjusted to maintain said compacting means speed and one driving member speed within said predetermined ratio.

2. A soil compactor according to claim 1 and comprising means for generating a third electrical signal to indicate when said contacting means (17) is elevated above said one driving member (15) and a fourth electrical signal to indicate when said compacting means (17) is below said rear driving member, said microcontroller means (42) being responsive to said third and fourth electrical signals to selectively vary torque applied by said first and second hydraulic motors (32, 36).

3. A soil compactor according to claim 2, wherein said predetermined ratio is 1.0, plus or minus 5 percent.

4. A soil compactor according to claim 1, 2 or 3 wherein said electronic torque control means (34, 38) on said first and second motors (32, 36), each includes means for varying motor hydraulic displacement to vary torque.

5. A soil compactor according to claim 1, 2 or 3 wherein said electronic torque control means on said first and second motors, each includes means for varying motor hydraulic pressure to vary torque.

6. A soil compaacator according to any one of the preceding claims wherein said tractor means is connected to said compacting means through an articulated joint (20).

7. A soil compactor according to any one of the preceding claims wherein said one driving member includes a pair of tyres.

8. A vehicle according to any one of the preceding claims wherein said soil compactor includes a pair of tyres.

9. A soil compactor according to any one of claims 1 to 7 wherein said compactingmeans (17) is a steel drum.

10. A soil compactor according to any one of claims 1 to 6 or claim 8 when dependent upon any one of claims 1 to 6 wherein said one driving member is a steel drum.

## Patentansprüche

1. Erdverdichter aufweisend:
- (a) eine Traktoreinrichtung zum Abstützen eines hinteren Teils (3) des Verdichters, wobei die Traktoreinrichtung an einem Antriebsglied angebracht ist, das mit einer ersten Querachse (9) drehbar verbunden ist;
- (b) eine Einrichtung (17) zum Verdichten von Material, die an einer zweiten Querachse (25) parallel zu der ersten Achse (9) angebracht ist, wobei die Verdichtungseinrichtung (17) mit der Traktoreinrichtung verbunden ist;
- (c) eine eine geschlossene Schleife bildende, parallele hydraulische Schaltkreiseinrichtung zum Antrieb des Verdichters, wobei die hydraulische Schaltkreiseinrichtung aufweist:
- (i) einen ersten hydraulischen Motor (32) zum Drehen des einen Antriebsgliedes, wobei der erste Motor eine elektronische Drehmomentsteuereinrichtung (34) zum Verändern der hydraulischen Verstellung des ersten Motors (32) umfaßt, um das durch den ersten Motor aufgebrachte Drehmoment zu verändern; und
- (ii) einen zweiten hydraulischen Motor (36) zum Drehen der Verdichtungseinrichtung (17), wobei der zweite Motor eine elektronische Drehmomentsteuereinrichtung (38) zum Verändern der hydraulischen Verstellung des zweiten Motors aufweist, um das durch den zweiten hydraulischen Motor aufgebrachte Drehmoment zu verändern;
**gekennzeichnet** durch
- (d) eine Zugsteuereinrichtung (40) zum Steuern der hydraulischen Schaltkreiseinrichtung zum wahlweisen und unabhängigen Verändern des durch die ersten und zweiten hydraulischen Motore aufgebrachten Drehmoments, wodurch die Drehgeschwindigkeit des einen Antriebsglieds und die Drehgeschwindigkeit der Verbindungseinrichtung innerhalb eines vorbestimmten Verhältnisses zueinander gesteuert werden, wobei die Zugsteuereinrichtung aufweist:
- (i) eine erste Geschwindigkeitsfühleinrichtung (44) zum Abfühlen der Drehgeschwindigkeit des ersten hydraulischen Motors (32) und zum Erzeugen eines ersten, dazu proportionalen elektrischen Signals,
- (ii) eine zweite Geschwindigkeitsfühleinrichtung (46) zum Abfühlen der Drehgeschwindigkeit des zweiten hydraulischen Motors (36) und zum Erzeugen eines zweiten, dazu proportionalen elektrischen Signals,
- (iii) eine Mikrosteuereinrichtung (42), die elektrisch mit den ersten und zweiten Geschwindigkeitsfühleinrichtungen und mit den elektronischen Drehmomentsteuereinrichtungen jedes der ersten und zweiten Motore verbunden ist, wobei die Mikrosteuereinrichtung auf die ersten und zweiten elektrischen Signale anspricht, um die elektronische Drehmomentsteuereinrichtung wenigstens eines der ersten und zweiten Motoreinrichtungen so anzutreiben, daß das durch diesen einen der ersten und zweiten Motoren aufgebrachte Drehmoment derart variiert wird, daß die Drehgeschwindigkeit des einen Antriebsglieds (15) und die Drehgeschwindigkeit der Verdichtungseinrichtung (17) innerhalb des vorbestimmten Verhältnisses gesteuert werden; und ferner
- (e) eine Neigungsfühleinrichtung (50) zum Abfühlen, wenn der Verdichter auf einem Hang derart angeordnet ist, daß sich die Verdichtungseinrichtung (17) relativ oberhalb oder unterhalb des einen Antriebsglieds (15) befindet, wobei die Neigungsfühleinrichtung elektrisch mit der Mikrosteuereinrichtung (42) so verbunden ist, daß das durch den ersten Motor (32) aufgebrachte Drehmoment auf einen vorbestimmten Betrag vermindert wird, wenn das Antriebsglied (15) sich oberhalb der Verdichtungseinrichtung (17) befindet, um so die Drehgeschwindigkeit des einen Antriebsglieds so zu steuern, daß es dem einen Antriebsglied gestattet wird, den Kontakt mit einer geneigten Oberfläche aufrechtzuerhalten, und daß das durch den zweiten Motor (36) aufgebrachte Drehmoment so eingestellt wird, daß die Geschwindigkeit der Verdichtungseinrichtung und die Geschwindigkeit des einen Antriebsglieds innerhalb des vorbestimmten Verhältnisses aufrechterhalten werden.

2. Erdverdichter nach Anspruch 1 mit einer Einrichtung zum Erzeugen eines dritten elektrischen Signals zum Anzeigen, wenn die Verdichtungseinrichtung (17) sich oberhalb des einen Antriebsglieds (15) befindet, und eines vierten elektrischen Signals zum Anzeigen, wenn die Verdichtungseinrichtung (17) sich unterhalb des hinteren Antriebsglieds befindet, wobei die Mikrosteuereinrichtung (42) auf die dritten und vierten elektrischen Signale anspricht, um selektiv das Drehmoment zu verändern, das durch die ersten und zweiten hydraulischen Motore (32, 36) aufgebracht wird.

3. Erdverdichter nach Anspruch 2, bei dem das vorbestimmte Verhältnis 1,0 plus oder minus 5 Prozent ist.

4. Erdverdichter nach Anspruch 1, 2 oder 3, wobei die elektronische Drehmomentsteuereinrichtung (34, 38) an den ersten und zweiten Motoren (32, 36) jeweils eine Einrichtung zum Verändern der hydraulischen Motorverstellung zum Verändern des Drehmoments aufweist.

5. Erdverdichter nach Anspruch 1, 2 oder 3, wobei die elektronische Drehmomentsteuereinrichtung an den ersten und zweiten Motoren jeweils eine Einrichtung zum Verändern des hydraulischen Motordrucks zum Verändern des Drehmoments aufweist.

6. Erdverdichter nach irgendeinem der vorhergehenden Ansprüche, wobei die Traktoreinrichtung mit der Verdichtungseinrichtung durch eine Gelenkverbindung (20) verbunden ist.

7. Erdverdichter nach irgendeinem der vorhergehenden Ansprüche, wobei das eine Antriebsglied ein Paar von Reifen aufweist.

8. Fahrzeug nach irgendeinem der vorhergehenden Ansprüche, wobei der Erdverdichter ein Paar von Reifen aufweist.

9. Erdverdichter nach irgendeinem der Ansprüche 1 bis 7, wobei die Verdichtungseinrichtung (17) eine Stahltrommel ist.

10. Erdverdichter nach irgendeinem der Ansprüche 1 bis 6 oder Anspruch 8, soweit abhängig von irgendeinem der Ansprüche 1 bis 6, wobei das eine Antriebsglied eine Stahltrommel ist.

## Revendications

1. Rouleau de compactage de sol, comprenant :
(a) un dispositif tracteur destiné à supporter une partie arrière (3) du rouleau de compactage, le dispositif tracteur étant monté sur un premier organe menant raccordé à un premier essieu transversal (9) afin qu'il puisse tourner,
(b) un dispositif (17) destiné à compacter un matériau, monté sur un second essieu transversal (25) parallèle au premier essieu (9), le dispositif de compactage (17) étant raccordé au dispositif tracteur, et
(c) un circuit hydraulique parallèle en boucle fermée destiné à la propulsion du rouleau de compactage, le circuit hydraulique comprenant :
(i) un premier moteur hydraulique (32) destiné à faire tourner le premier organe menant, le premier moteur comprenant un dispositif électronique (34) de réglage de couple destiné à faire varier le déplacement hydraulique du premier moteur (32) pour faire varier le couple appliqué au premier moteur, et
(ii) un second moteur hydraulique (36) destiné à faire tourner le dispositif de compactage (17), le second moteur comprenant un dispositif électronique (38) de réglage de couple destiné à faire varier le déplacement hydraulique du second moteur pour faire varier le couple appliqué par le second moteur hydraulique,
caractérisé par
(d) un dispositif (40) de commande de traction destiné à commander le circuit hydraulique pour faire varier sélectivement et indépendamment le couple appliqué par le premier et le second moteur hydraulique, si bien que la vitesse de rotation du premier organe menant et la vitesse de rotation du dispositif de raccordement sont réglées suivant un rapport prédéterminé l'une avec l'autre, le dispositif de commande de traction comprenant :
(i) un premier dispositif (44) de détection de vitesse destiné à détecter la vitesse de rotation du premier moteur hydraulique (32) et à créer un premier signal électrique qui lui est proportionnel,
(ii) un second dispositif (46) de détection de vitesse destiné à détecter la vitesse de rotation du second moteur hydraulique (36) et à créer un second signal électrique qui lui est proportionnel, et
(iii) un dispositif à microcontrôleur (42) connecté électriquement aux premier et second dispositifs de détection de vitesse et au dispositif électronique de réglage de couple de chacun des premier et second moteurs, le dispositif à microcontrôleur étant commandé par les premiers et seconds signaux électriques afin qu'il pilote les dispositifs électroniques de réglage de couple de l'un au moins des premier et second dispositifs moteurs et fasse ainsi varier le couple appliqué par ce moteur parmi les premier et second dispositifs moteurs et que la vitesse de rotation du premier organe menant (15) et la vitesse de rotation du dispositif de compactage (17) soient réglées suivant un rapport prédéterminé, et comprenant :
(e) un dispositif (50) de détection de pente destiné à détecter si le rouleau de compactage se trouve sur une pente de sorte que le dispositif de compactage (17) se trouve en position relative au-dessus ou au-dessous de l'organe menant (15), le dispositif de détection de pente étant connecté électriquement au dispositif à microcontrôleur (42) afin que le couple appliqué par le premier moteur (32) soit réduit à une valeur prédéterminée lorsque l'organe d'entraînement (15) est soulevé au-dessus du dispositif de compactage (17) si bien que la vitesse de rotation de l'organe menant est réglée afin qu'elle permette à l'organe menant de rester au contact d'une surface en pente, et le couple appliqué par le second moteur (36) est ajusté afin que la vitesse du dispositif de compactage et la vitesse de l'organe menant soient maintenues dans le rapport prédéterminé.

2. Rouleau de compactage de sol selon la revendication 1, comprenant un dispositif générateur d'un troisième signal électrique destiné à indiquer le moment où le dispositif de compactage (17) est surélevé par rapport à l'organe d'entraînement (15), et un quatrième signal électrique destiné à indiquer si le dispositif de compactage (17) est au-dessous de l'organe menant arrière, le dispositif à microcontrôleur (42) étant commandé par les troisième et quatrième signaux électriques afin qu'il fasse varier sélectivement le couple appliqué par le premier et le second moteur hydraulique (32, 36).

3. Rouleau de compactage de sol selon la revendication 2, dans lequel le rapport prédéterminé est égal à 1,0 ± 5 %.

4. Rouleau de compactage de sol selon la revendication 1, 2 ou 3, dans lequel les dispositifs électroniques (34, 38) de réglage de couple du premier et du second moteur (32, 36) comportent chacun un dispositif destiné à faire varier le déplacement hydraulique du moteur pour faire varier lé couple.

5. Rouleau de compactage de sol selon la revendication 1, 2 ou 3, dans lequel les dispositifs électroniques de réglage de couple du premier et du second moteur comportent chacun un dispositif destiné à faire varier la pression hydraulique du moteur pour faire varier le couple.

6. Rouleau de compactage de sol selon l'une quelconque des revendications précédentes, dans lequel le dispositif tracteur est raccordé au dispositif de compactage par un joint articulé (20).

7. Rouleau de compactage de sol selon l'une quelconque des revendications précédentes, dans lequel le premier organe menant comprend deux pneumatiques.

8. Véhicule selon l'une quelconque des revendications précédentes, dans lequel le rouleau de compactage du sol comprend deux pneumatiques.

9. Rouleau de compactage de sol selon l'une quelconque des revendications 1 à 7, dans lequel le dispositif de compactage (17) est un tambour d'acier.

10. Rouleau de compactage de sol selon l'une quelconque des revendications 1 à 6 et 8 lorsqu'elle dépend de l'une des revendications 1 à 6, dans lequel ledit organe menant est un tambour d'acier.
